# EUROPEAN PATENT APPLICATION

(11) **EP 4 575 923 A1**
(43) Date of publication of application: **25.06.2025**
(21) Application number: 23383329.2
(22) Date of filing: 20.12.2023
(51) Int. Cl.: G06N 10/60, G06N 3/09, G06N 3/063

(54) **SYSTEM AND METHODS FOR IMPLEMENTING SYMMETRIC TENSOR NETWORKS FOR QUANTUM MACHINE LEARNING AND RELATED METHODS**

(71) Applicant: Multiverse Computing S.L., 20014 Donostia-San Sebastian (ES)
(72) Inventor: ORÚS, Roman, Donostia / San Sebastián (ES); JAHROMI, Saeed, Donostia / San Sebastián (ES); SINGH, Sukhbinder, Donostia / San Sebastián (ES)
(74) Representative: Balder IP Law, S.L.

(57) **Abstract**

The claims pertain to a computational framework and a method for implementing symmetric tensor networks for quantum machine learning using symmetric deep learning. The framework and method involve the execution of techniques to deploy a computational framework, creation of mathematical structures for machine learning, and utilization of deep learning for faster convergence and training. The system includes hardware components to implement the model, an optimization technique to adjust elements, and an inference module for predictions over new datapoints. The mathematical structures used are symmetric tensor networks, which are built using the symmetries of the dataset and replace the weight matrices in the deep learning module.

## Description

### TECHNICAL FIELD

The invention pertains to the implementation of symmetric tensor networks in quantum machine learning, specifically in symmetric deep learning. It involves a system and methods that utilize the symmetries of a dataset for study.

### BACKGROUND

Quantum machine learning is a rapidly evolving field that combines quantum physics and machine learning techniques to solve complex computational problems. One of the key challenges in this field is the efficient handling and processing of large datasets. Traditional machine learning methods often struggle with the high dimensionality and complexity of these datasets. Moreover, the conventional deep learning models, while powerful, often require extensive computational resources and time for training, which can be a limiting factor in many applications. Additionally, these models do not always take into account the inherent symmetries present in many datasets, which can lead to inefficiencies and inaccuracies in the learning process. Therefore, there is a need for more efficient and accurate methods for implementing machine learning algorithms in the quantum domain.

### SUMMARY

In accordance with embodiments, a computational framework is provided for implementing symmetric tensor networks for quantum machine learning using symmetric deep learning. Techniques or procedures are executed to deploy the computational framework and mathematical structures are created for utilization of a type of machine learning. A type of deep learning is utilized for faster convergence and training, better precision. Hardware components are employed to implement the model and data is extracted from a collection of data. Computational units are arranged in layers and numerical arrays in deep learning module are substituted by mathematical structures. A specific type of mathematical structures is used and an optimization technique is applied to adjust adjustable elements. Performance measure for a subset of dataset is reduced and output of the model for unseen data is generated.

In accordance with other embodiments, a method is provided for implementing symmetric tensor networks for quantum machine learning using symmetric deep learning. The method includes execution of techniques or procedures to deploy a computational framework, creation of mathematical structures for utilization of a type of machine learning, utilization of a type of deep learning for faster convergence and training, better precision, employment of hardware components to implement the model, extraction of data from a collection of data, arrangement of computational units in layers, substitution of numerical arrays in deep learning module by mathematical structures, usage of specific type of mathematical structures, application of optimization technique to adjust adjustable elements, reduction of performance measure for a subset of dataset, and generation of output of the model for unseen data.

### BRIEF DESCRIPTION OF THE DRAWINGS

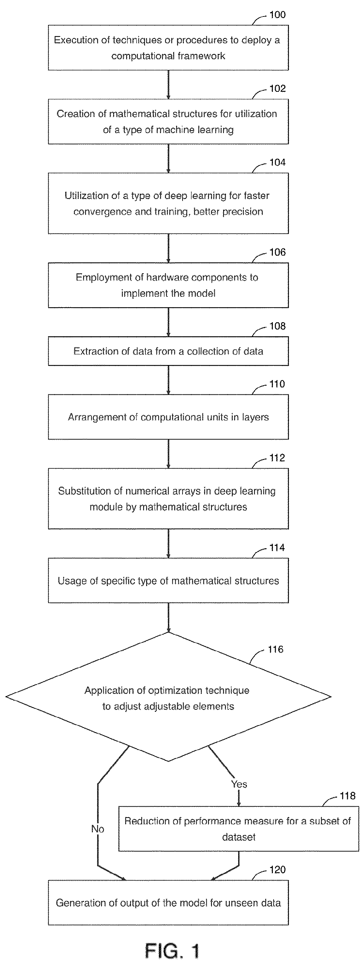

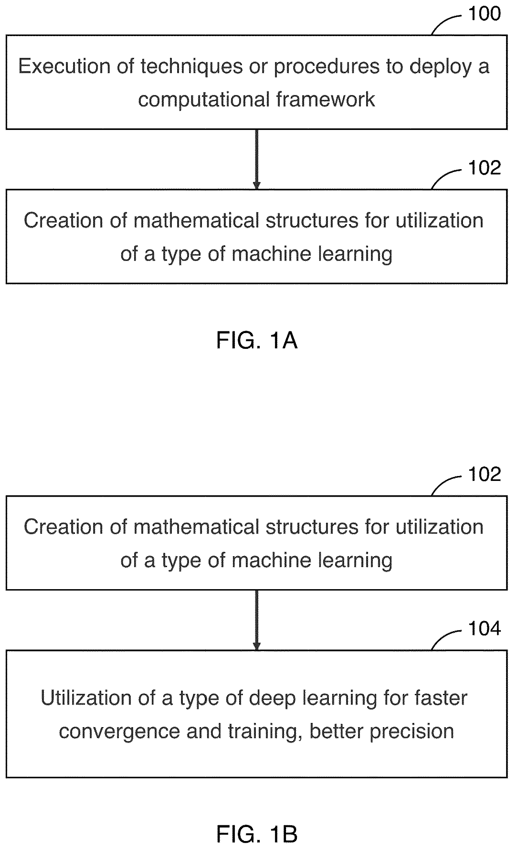

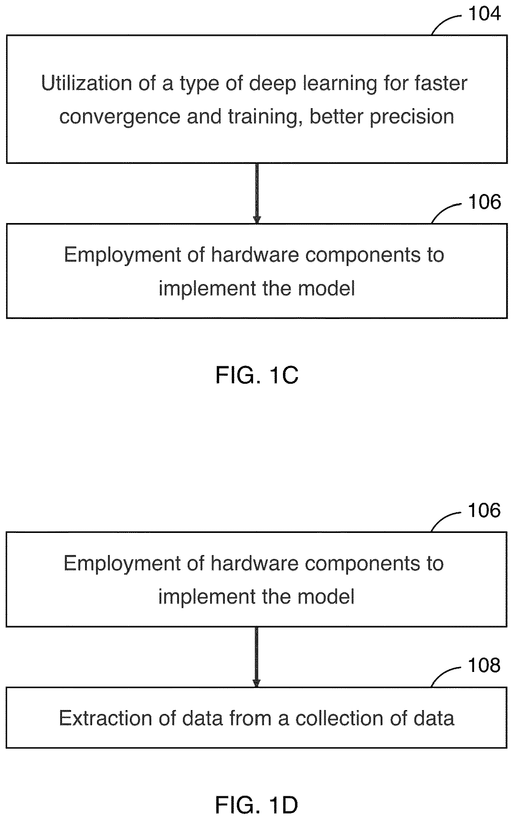

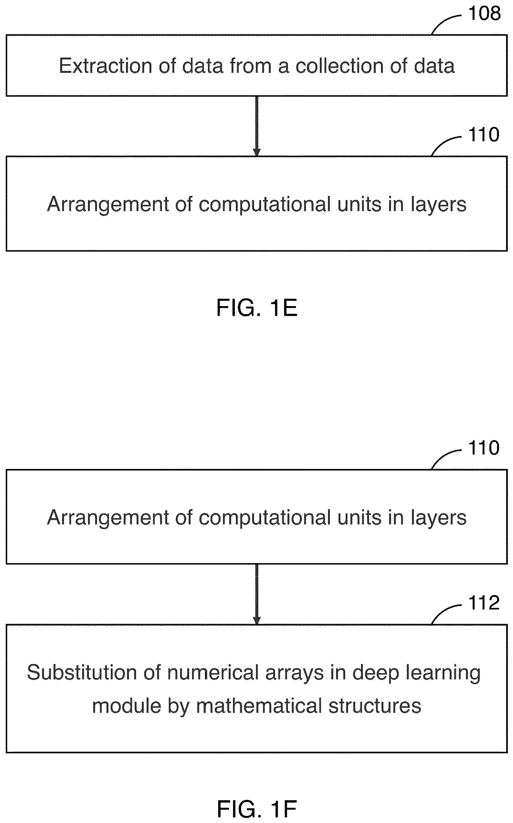

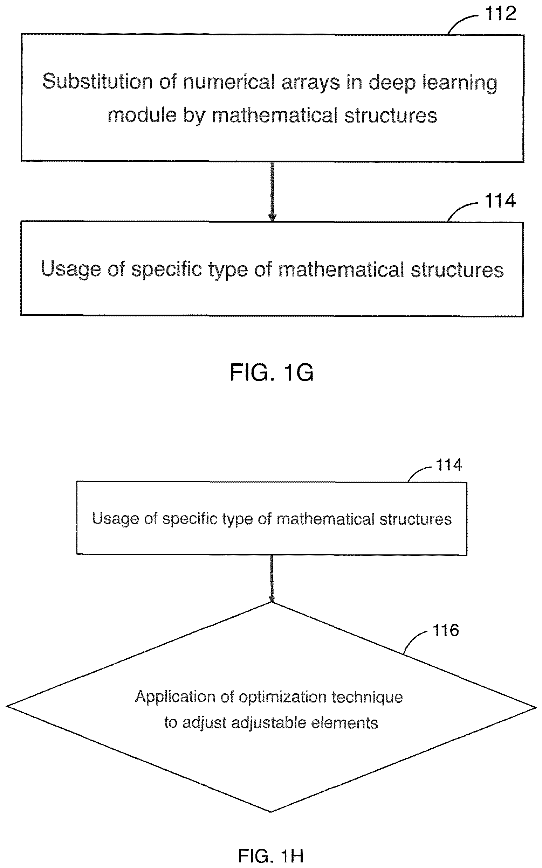

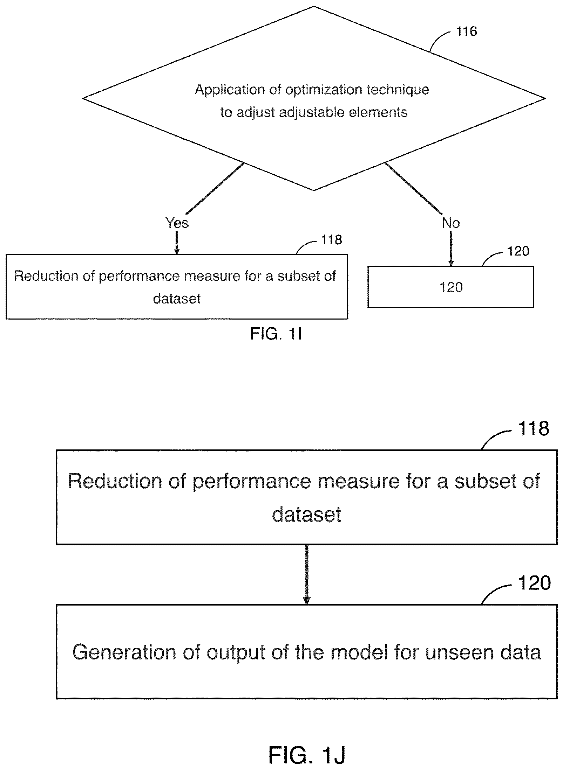

FIG. 1 illustrates, in a flowchart, operations for implementing symmetric tensor networks for quantum machine learning using symmetric deep learning.
FIG. 1A illustrates, in a flowchart, operations for deploying a computational framework and creating mathematical structures for machine learning.
FIG. 1B illustrates, in a flowchart, operations for utilizing a type of deep learning for faster convergence, training, and better precision.
FIG. 1C illustrates, in a flowchart, operations for employing hardware components to implement the model.
FIG. 1D illustrates, in a flowchart, operations for extracting data from a collection of data.
FIG. 1E illustrates, in a flowchart, operations for arranging computational units in layers.
FIG. 1F illustrates, in a flowchart, operations for substituting numerical arrays in the deep learning module by mathematical structures.
FIG. 1G illustrates, in a flowchart, operations for using specific types of mathematical structures.
FIG. 1H illustrates, in a flowchart, operations for applying optimization techniques to adjust adjustable elements.
FIG. 1I illustrates, in a flowchart, operations for reducing the performance measure for a subset of the dataset.
FIG. 1J illustrates, in a flowchart, operations for generating the output of the model for unseen data.

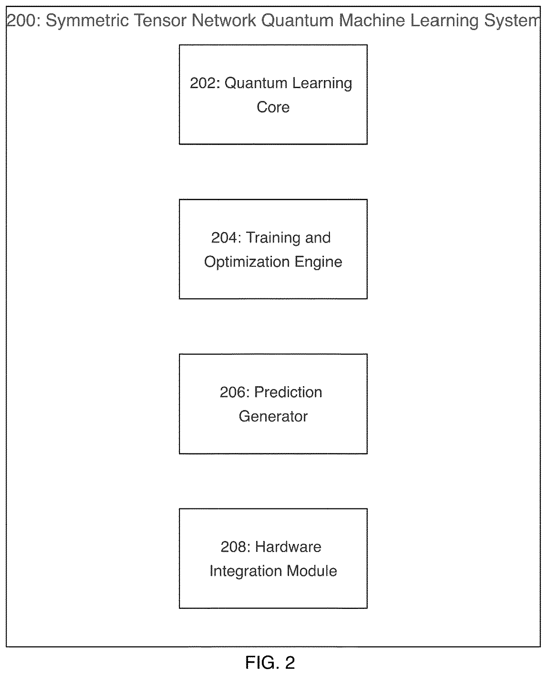

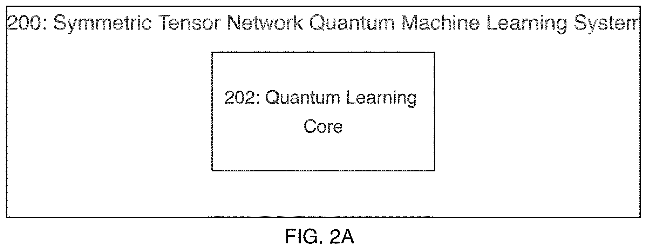

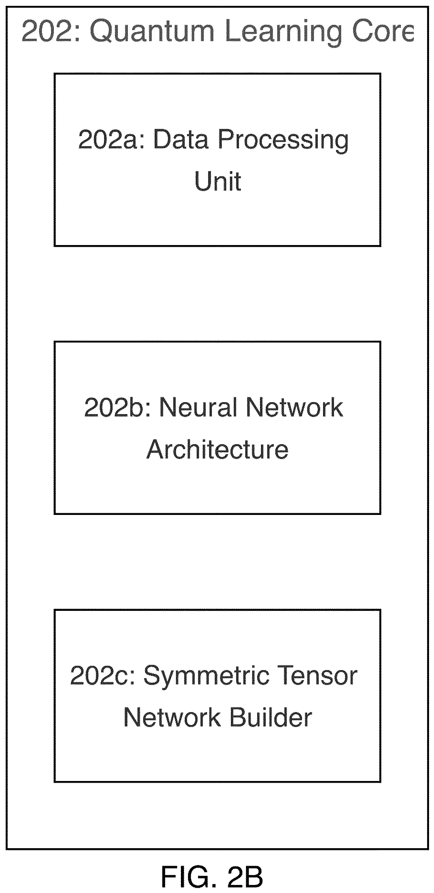

FIG. 2 illustrates, in a block diagram, the main components of the Symmetric Tensor Network Quantum Machine Learning System.
FIG. 2A FIG. 2A illustrates, in a block diagram, the 'Quantum Learning Core' as a main component of the 'Symmetric Tensor Network Quantum Machine Learning System'.
FIG. 2B FIG. 2B illustrates, in a block diagram, the sub-components of the 'Quantum Learning Core'.

### DETAILED DESCRIPTION

Step 100 refers to the process of setting up a computational environment that supports the use of symmetric tensor networks for machine learning. This involves the establishment of a system or structure that can accommodate the implementation of these networks.

The system or structure, referred to as the computational framework, is the overarching environment in which the networks are implemented. This could take the form of various types of computing systems. The methods or algorithms used to establish and configure the computational framework are referred to as techniques or procedures. These may encompass a range of initialization procedures, configuration settings, and deployment strategies.

Symmetric tensor networks are mathematical structures with symmetry properties, meaning they remain unchanged under certain transformations. In the context of machine learning, these networks are used to represent and manipulate states in a computationally efficient manner.

The process of deploying the computational framework involves configuring the system to use symmetric tensor networks, setting up the necessary resources, and initializing the networks with appropriate parameters. This enables the efficient execution of machine learning algorithms, potentially leading to faster convergence and training, and improved precision.

The deployment of the computational framework sets the stage for all subsequent steps and actions, and influences the overall performance and effectiveness of the system.

Step 102 refers to the development and implementation of mathematical structures, specifically symmetric tensor networks, for use in machine learning. These networks are mathematical constructs designed to represent and manipulate states in an efficient manner.

Symmetric tensor networks are characterized by their symmetry properties, which means they remain unchanged under certain transformations. This characteristic is utilized in machine learning, where efficient representation and manipulation of data can enhance the performance of algorithms.

The development of these mathematical structures involves defining the network architecture, initializing network parameters, and configuring network settings. These actions are carried out using various techniques and procedures, selected based on the specific requirements of the machine learning task.

The development of symmetric tensor networks is a part of the process of setting up the computational framework described in Step 100. It provides the basis for subsequent actions, including the arrangement of computational units in layers (Step 110), the substitution of numerical arrays in the deep learning module by mathematical structures (Step 112), and the application of an optimization technique to adjust elements (Step 116).

In summary, Step 102 involves the development of mathematical structures, specifically symmetric tensor networks, for use in machine learning. This step is part of the process of setting up the computational framework and influences subsequent steps and actions.

Step 104 refers to the application of a specific type of deep learning, known as symmetric deep learning. This type of deep learning uses symmetric tensor networks, mathematical structures designed to represent and manipulate states efficiently.

Symmetric tensor networks have symmetry properties, meaning they remain unchanged under certain transformations. This characteristic is utilized in machine learning, where efficient representation and manipulation of data can enhance the performance of algorithms.

The application of symmetric deep learning involves the use of machine learning algorithms designed to work with symmetric tensor networks. These algorithms are implemented in the computational framework established in Step 100 and use the mathematical structures developed in Step 102.

The aim of this step is to enhance the speed of convergence and the precision of the learning process. Convergence refers to the process of the learning algorithm reaching its optimal state, while precision refers to the accuracy of the results produced by the learning process.

In summary, Step 104 involves the application of symmetric deep learning in the computational framework. This step is part of the learning process and influences the efficiency and performance of the system.

Step 106 refers to the use of specific hardware, such as deep learning chips, to support the computational framework and the execution of the symmetric deep learning process.

Deep learning chips are hardware designed to accelerate computation-intensive tasks involved in deep learning. These tasks include operations such as matrix multiplications and convolutions, which are fundamental to many deep learning algorithms.

The use of deep learning chips involves integrating these hardware components into the computational framework. This integration can involve the physical installation of the chips into a computing system, as well as software configuration to ensure that the deep learning algorithms can effectively use the computational capabilities of the chips.

The use of deep learning chips can enhance the speed of the deep learning process, leading to faster convergence and training times. This is because these chips are designed to perform computations common in deep learning more quickly and efficiently than general-purpose CPUs.

In summary, Step 106 involves the use of deep learning chips in the computational framework. This step provides the necessary hardware resources to support the computationally intensive tasks involved in deep learning.

Step 108 refers to the process of reading and processing data from a dataset. This data, known as symmetric classical data, serves as the input for the symmetric deep learning process.

The process of extracting data involves reading the data from the dataset and converting it into a format that can be used by the deep learning algorithms. This may involve various data preprocessing steps, such as normalization, transformation, and encoding, depending on the requirements of the deep learning algorithms and the nature of the data.

Symmetric classical data is data that has certain symmetry properties, meaning it remains unchanged under certain transformations. These properties can be utilized by the symmetric tensor networks to enhance the efficiency and performance of the deep learning process.

The extraction of data provides the input data that the deep learning algorithms use to learn and make predictions. The characteristics of the extracted data can influence the performance of the deep learning process.

In summary, Step 108 involves the extraction of symmetric classical data from a dataset. This step provides the input data for the symmetric deep learning process.

Step 110 refers to the process of organizing computational units, known as neurons, into a layered structure within the symmetric tensor deep learning module.

Neurons are computational units that process a set of inputs, apply weights to these inputs, and pass the result through an activation function to produce an output. The weights of the neurons are adjusted during the learning process to minimize the difference between the predicted and actual outputs.

The organization of neurons into layers is a structure used in neural networks. Each layer of neurons processes the outputs of the previous layer as its inputs and passes its outputs to the next layer. The first layer of neurons processes the input data, and the last layer produces the final outputs of the network.

The organization of neurons in layers allows the network to learn patterns in the data. Each layer of neurons can recognize different features in the data, and the layers can build on each other to recognize complex patterns.

In summary, Step 110 involves the organization of neurons in layers within the symmetric tensor deep learning module. This step influences the structure and function of the neural network and its ability to learn and make predictions.

Step 112 refers to the process of replacing numerical arrays in the deep learning module with mathematical structures. Specifically, this involves replacing weight matrices, which are numerical arrays used in neurons, with symmetric tensor networks.

Weight matrices are numerical arrays that store the weights of connections between neurons in a neural network. These weights are adjusted during the learning process to minimize the difference between predicted and actual outputs.

Symmetric tensor networks are mathematical structures designed to represent and manipulate states efficiently. They have properties that allow them to remain unchanged under certain transformations, which can be utilized to enhance the efficiency of the learning process.

The replacement of weight matrices with symmetric tensor networks involves initializing the symmetric tensor networks with appropriate parameters and configuring the neurons to use these networks instead of weight matrices.

The replacement of weight matrices with symmetric tensor networks can enhance the efficiency of the learning process, as symmetric tensor networks can represent and manipulate data more efficiently than traditional weight matrices.

In summary, Step 112 involves replacing weight matrices in the deep learning module with symmetric tensor networks. This step influences the structure and function of the neural network and its ability to learn and make predictions.

Step 114 refers to the application of specific mathematical structures, known as symmetric matrix product operators, in the symmetric tensor deep learning module.

Symmetric matrix product operators are mathematical structures used to represent and manipulate states efficiently in quantum machine learning. They are a type of symmetric tensor networks, which are mathematical structures that remain unchanged under certain transformations.

The application of symmetric matrix product operators involves integrating these mathematical structures into the symmetric tensor deep learning module. This may involve initializing the symmetric matrix product operators with appropriate parameters and configuring the module to use these operators instead of other mathematical structures.

The application of symmetric matrix product operators can enhance the efficiency of the deep learning process. Symmetric matrix product operators can represent and manipulate data more efficiently than other mathematical structures due to their symmetry properties.

In summary, Step 114 involves the application of symmetric matrix product operators in the symmetric tensor deep learning module. This step influences the structure and function of the neural network and its ability to learn and make predictions.

Step 116 refers to the use of an optimization technique to adjust elements in a network. Specifically, this involves using a classical optimization algorithm, such as gradient descent, to adjust the parameters of the symmetric tensor deep learning network.

Parameters are elements in a neural network that are updated during the learning process to minimize the difference between predicted and actual outputs. In the context of symmetric tensor deep learning, parameters include the weights of the symmetric tensor networks and other variables that influence the network's behavior.

A classical optimization algorithm is a mathematical method that adjusts the network's parameters iteratively to find values that minimize a cost function. The cost function measures the difference between the network's predicted and actual outputs, and the learning process aims to find parameters that minimize this cost.

The use of the classical optimization algorithm involves calculating the gradient of the cost function with respect to the parameters, updating the parameters in the direction of the negative gradient, and repeating these steps until the cost function reaches a minimum.

In summary, Step 116 involves using a classical optimization algorithm to adjust the parameters of the symmetric tensor deep learning network. This step influences how the network adjusts its parameters to learn from the data.

Step 118 refers to the process of minimizing a performance measure for a subset of the dataset. Specifically, this involves minimizing a cost function for a training set, which is a subset of the dataset used to train the symmetric tensor deep learning network.

The cost function is a measure that quantifies the difference between the predicted and actual outputs of the network. The learning process aims to find the parameters of the network that minimize this cost.

The training set is a subset of the dataset used to train the network. The network adjusts its parameters to minimize the cost function based on patterns in the training data.

The minimization of the cost function involves calculating the cost for the current parameters, adjusting the parameters in a direction that reduces the cost, and repeating these steps until the cost reaches a minimum.

The minimization of the cost function guides the adjustment of the parameters and influences the performance of the network. By minimizing the cost function, the network can learn to make accurate predictions on the training data, which can then be used to make predictions on new data.

In summary, Step 118 involves minimizing a cost function for a training set. This step influences the adjustment of the parameters and the performance of the network.

Step 120 refers to the process of making predictions over a new set of datapoints, which are data that the model has not seen during the training process.

The generation of output involves applying the trained symmetric tensor deep learning network to the new set of datapoints. The network processes these datapoints through its layers of neurons and produces an output for each datapoint. The output is a prediction of the target variable for each datapoint, based on the patterns that the network has learned from the training data.

The new set of datapoints is a collection of data separate from the training set. These datapoints are used to evaluate the performance of the model on data it has not seen before.

The generation of output allows the model to apply the patterns it has learned from the training data to make predictions on new data. This can provide insights and predictions for various applications.

In summary, Step 120 involves the generation of output of the model for unseen data. This step allows the model to apply the patterns it has learned to make predictions on new data.

The Symmetric Tensor Network Quantum Machine Learning System, numbered as 200, is designed to implement symmetric tensor networks for quantum machine learning using symmetric deep learning. This system includes the Quantum Learning Core, numbered as 202, which executes techniques or procedures to deploy a computational framework. The core creates mathematical structures, specifically symmetric tensor networks, for quantum machine learning and employs a type of deep learning for faster convergence and training.

Within the Quantum Learning Core, the Data Processing Unit, numbered as 202-a, extracts data from a collection of data. This extraction process provides the necessary input for the system to function. The Neural Network Architecture, numbered as 202-b, arranges computational units in layers, facilitating the learning process by enabling the system to learn complex patterns and relationships in the data. The Symmetric Tensor Network Builder, numbered as 202-c, substitutes numerical arrays in the deep learning module with mathematical structures, allowing for the efficient representation and manipulation of high-dimensional data.

The system operates by deploying a computational framework, extracting and processing data, arranging computational units in layers, and substituting numerical arrays with mathematical structures. Each of these steps contributes to the system's operation, leading to its overall performance. The system also employs hardware components to implement the model, ensuring that it can handle the computational demands of the tasks it is designed to perform.

The Quantum Learning Core, numbered as 202, is part of the Symmetric Tensor Network Quantum Machine Learning System. It executes techniques or procedures to deploy a computational framework. The core creates mathematical structures, specifically symmetric tensor networks, for quantum machine learning. It also employs a type of deep learning, symmetric deep learning.

The Quantum Learning Core includes the Data Processing Unit, numbered as 202-a. This unit extracts data from a collection of data. The Neural Network Architecture, numbered as 202-b, arranges computational units in layers. The Symmetric Tensor Network Builder, numbered as 202-c, substitutes numerical arrays in the deep learning module with mathematical structures, specifically symmetric tensor networks.

The Quantum Learning Core operates by deploying a computational framework, extracting and processing data, arranging computational units in layers, and substituting numerical arrays with mathematical structures. Each of these steps contributes to the operation of the core.

The Training and Optimization Engine, numbered as 204, is part of the Symmetric Tensor Network Quantum Machine Learning System. This engine applies an optimization technique to adjust elements and reduce a performance measure for a subset of the dataset. The optimization technique used is a classical optimization algorithm. This algorithm fine-tunes the parameters of the symmetric tensor deep learning network. The performance measure that is reduced is a cost function for a training set.

The Training and Optimization Engine operates by applying an optimization technique to adjust elements and reduce a performance measure for a subset of the dataset. The optimization technique used is a classical optimization algorithm. This algorithm adjusts the parameters of the symmetric tensor deep learning network to minimize a cost function for a training set. The cost function is a measure of the system's performance, and minimizing it leads to improved performance of the system. The training set is a subset of the dataset used to train the system. The optimization process is carried out under specific conditions, such as when the system's performance is not meeting the desired standards or when there is a need to improve the system's performance. The method involves iteratively adjusting the parameters of the symmetric tensor deep learning network until the cost function is minimized.

The Prediction Generator, numbered as 206, is part of the Symmetric Tensor Network Quantum Machine Learning System. This component generates the output of the model for unseen data. The output generated is the predictions made by the system over a new set of datapoints.

The Prediction Generator operates by generating the output of the model for unseen data. The output generated is the predictions made by the system over a new set of datapoints. This process is carried out after the system has been trained and is ready to make predictions. The method involves using the trained model to make predictions on the new set of datapoints. The predictions are then used for various purposes such as making decisions or providing insights. This process contributes to the operation of the Prediction Generator and the system as a whole.

The Hardware Integration Module, numbered as 208, is part of the Symmetric Tensor Network Quantum Machine Learning System. This component employs hardware components to implement the model. The hardware components used can include deep learning chips.

The Hardware Integration Module operates by employing hardware components to implement the model. The hardware components used can include deep learning chips. This process is carried out to ensure that the system can handle the computational demands of the tasks it is designed to perform. The method involves integrating the model with the hardware components. This process contributes to the operation of the Hardware Integration Module and the system as a whole.

## Claims

1. A computational framework, comprising:
execution of techniques or procedures to deploy a computational framework;
creation of mathematical structures for utilization of a type of machine learning;
utilization of a type of deep learning for faster convergence and training, better precision;
employment of hardware components to implement the model;
extraction of data from a collection of data;
arrangement of computational units in layers;
substitution of numerical arrays in deep learning module by mathematical structures;
usage of specific type of mathematical structures;
application of optimization technique to adjust adjustable elements;
reduction of performance measure for a subset of dataset;
generation of output of the model for unseen data.

2. The computational framework of claim 1, wherein the mathematical structures are symmetric tensor networks.

3. The computational framework of claim 2, wherein the symmetric tensor networks are built using the symmetries of the dataset.

4. The computational framework of claim 3, wherein the weight matrices in the deep learning module are replaced by the symmetric tensor networks.

5. The computational framework of claim 4, wherein the system includes a classical optimization algorithm that fine-tunes the parameters of the symmetric tensor deep learning network to minimize a cost function for a training set.

6. The computational framework of claim 5, wherein the system includes an inference module that makes predictions over a new set of datapoints.

7. The computational framework of claim 6, wherein the model can be implemented on deep learning chips.

8. A method for implementing symmetric tensor networks for quantum machine learning using symmetric deep learning, comprising:
execution of techniques or procedures to deploy a computational framework;
creation of mathematical structures for utilization of a type of machine learning;
utilization of a type of deep learning for faster convergence and training, better precision;
employment of hardware components to implement the model;
extraction of data from a collection of data;
arrangement of computational units in layers;
substitution of numerical arrays in deep learning module by mathematical structures;
usage of specific type of mathematical structures;
application of optimization technique to adjust adjustable elements;
reduction of performance measure for a subset of dataset;
generation of output of the model for unseen data.

9. The method of claim 8, wherein the mathematical structures are symmetric tensor networks.

10. The method of claim 9, wherein the symmetric tensor networks are built using the symmetries of the dataset.

11. The method of claim 10, wherein the weight matrices in the deep learning module are replaced by the symmetric tensor networks.

12. The method of claim 11, wherein the system includes a classical optimization algorithm that fine-tunes the parameters of the symmetric tensor deep learning network to minimize a cost function for a training set.

13. The method of claim 12, wherein the system includes an inference module that makes predictions over a new set of datapoints.

14. The method of claim 13, wherein the model can be implemented on deep learning chips.

15. The method of claim 14, wherein the symmetric tensor networks are symmetric matrix product operators.

16. The method of claim 15, wherein the classical optimization algorithm uses backpropagation or similar.

17. The method of claim 16, wherein the parameters are fine-tuned to minimize a cost function for a training set.

18. The method of claim 17, wherein the inference module makes predictions over a new set of datapoints.

19. The method of claim 18, wherein the predictions are made over a new set of datapoints.

20. The method of claim 19, wherein the new set of datapoints are unseen data.
